# FASCICULE DE BREVET EUROPEEN

(11) **EP 2 785 664 B1**
(45) Date de publication et mention de la délivrance du brevet: **05.01.2022**
(21) Numéro de dépôt: 12806604.0
(22) Date de dépôt: 30.11.2012
(51) Int. Cl.: C04B 28/02, C04B 28/06, C04B 38/08, C04B 40/00

(54) **BÉTON OU MORTIER LÉGER STRUCTUREL, SON PROCÉDÉ DE FABRICATION ET SON UTILISATION EN TANT QUE BÉTON AUTO-PLACANT**
LEICHTGEWICHTIGER KONSTRUKTIONSBETON ODER MÖRTEL, VERFAHREN ZU SEINER HERSTELLUNG UND VERWENDUNG ALS SELBSTVERTEILENDER BETON
STRUCTURAL LIGHTWEIGHT CONCRETE OR MORTAR, METHOD FOR MANUFACTURING SAME AND USE THEREOF AS SELF-PLACING CONCRETE

(30) Priorité: 01.12.2011 FR 1161028
(43) Date de publication de la demande: 08.10.2014
(73) Titulaire: ITALCEMENTI S.p.A., 24126 Bergamo (IT)
(72) Inventeur: SHINK, Mélanie, F-78000 Versailles (FR); AÏT ALAÏWA, Abdelghafour, F-78200 Mantes La Jolie (FR)
(74) Mandataire: De Gregori, Antonella
(86) Numéro de dépôt international: PCT/FR2012/052761
(87) Numéro de publication internationale: WO 2013/079877

(56) Documents cités:
- WO-A1-2004/080912
- WO-A1-2011/061383
- WO-A1-2011/114036
- WO-A2-2009/083809
- FR-A1- 2 350 313
- FR-A1- 2 364 870
- FR-A1- 2 929 270
- US-A- 4 131 480
- TAKAHASHI, Y. ET AL: "Compositions for highly thermal insulating high-strength lightweight concrete and manufacture of concrete thereof", CHEMICAL ABSTRACTS, CHEMICAL ABSTRACTS SERVICE (C A S), US, vol. 118, no. 14, 5 avril 1993 (1993-04-05), page 394, XP000401466, ISSN: 0009-2258
- SHI CAIJUN ET AL: "MIXTURE PROPORTIONING AND PROPERTIES OF SELF-CONSOLIDATING LIGHTWEIGHT CONCRETE CONTAINING GLASS POWDER", ACI MATERIALS JOURNAL, AMERICAN CONCRETE INSTITUTE, FARMINGTON HILLS, MI, US, vol. 102, no. 5, 1 septembre 2005 (2005-09-01), pages 355-363, XP008077131, ISSN: 0889-325X

## Description

La présente invention concerne le domaine des bétons et mortiers légers structurels, et plus particulièrement les compositions de bétons ou mortiers légers structurels, leur procédé de fabrication et les bétons ou mortiers structurels ainsi obtenus, de même que leur utilisation en tant que béton auto-plaçant.

Depuis plusieurs années, pour une meilleure isolation des bâtiments on cherche à réaliser des bétons ou mortiers à faible conductivité thermique. A cet effet, ont été mises au point des compositions de mortiers renfermant des adjuvants entraîneurs d'air, une teneur en air importante permettant d'augmenter les performances thermiques isolantes du mortier, et/ou des compositions renfermant des granulats légers, tels que des pierres ponces, des argiles ou des schistes expansés présentant une grande porosité qui confère au matériau un caractère isolant.

Cependant cet allègement ne doit pas se faire au détriment d'une réduction de la résistance du béton ou mortier, et notamment de sa résistance à la compression, qui doit être d'au moins 25 MPa après 28 jours.

Les difficultés s'accroissent lors de la réalisation des bétons, lorsque l'on cherche à augmenter leurs fluidités tout en évitant le phénomène de ressuage et la ségrégation des granulats. Ces inconvénients sont amplifiés dans le cas des bétons auto-plaçants, pour lesquels une grande fluidité est requise.

De plus, les propriétés de résistance mécaniques peuvent être encore affectées par le remplacement, en vue d'améliorer les performances thermiques du matériau en réduisant sa masse volumique (et par conséquent, sa conductivité thermique) de la totalité des granulats traditionnels (de masse volumique élevée) par des granulats légers, par exemple de type expansés.

La présente invention a pour but de pallier les inconvénients précités en proposant une composition de béton mortier permettant d'obtenir, à l'état sec, un béton ou un mortier léger (béton ou mortier dont la masse volumique après séchage à l'étuve est inférieure à 1500 kg/m³), présentant une résistance à la compression minimale de 25 MPa après 28 jours et une conductivité thermique maximale de 0,60 W/m.K, sans phénomène de ségrégation ou de ressuage lors de la mise en place du béton ou du mortier frais.

Un autre but de l'invention est de proposer une composition de béton ou mortier léger structurel pouvant être utilisé comme béton ou mortier auto-plaçant, c'est-à-dire présentant une consistance très fluide.

A cet effet, la présente invention concerne une composition de béton ou mortier, léger, structurel, comprenant, à l'état frais, un liant hydraulique, des granulats et de l'eau, caractérisée en ce qu'elle comprend :
- une teneur en liant hydraulique, incluant du ciment et d'éventuelles additions, supérieure ou égale à 280 kg/m³ de béton frais, le liant hydraulique comprend un ciment choisi parmi les ciments CEM I, CEM II, CEM III, CEM IV et CEM V, ou un clinker sulfo-alumineux ou un mélange de ceux-ci, les additions éventuelles étant sous la forme de particules fines de taille inférieure à 125 micromètres, choisies parmi les fillers calcaires, les fillers siliceux, les fumées de silice, les cendres volantes, les laitiers de haut fourneau et les métakaolins,
- des granulats grossiers de taille supérieure à 4 mm et/ou des granulats fins de granulométrie inférieure ou égale à 4 mm, une proportion volumique d'au moins 70 % desdits granulats, fins et/ou grossiers, étant composée de particules légères, fines et/ou grossières, dont la masse volumique réelle à l'état sec est comprise entre 800 et 1600 kg/m³, la quantité totale de granulats étant supérieure ou égale à 500 L/m³ de béton frais,
- un superplastifiant,
- au moins un agent viscosant et
- de l'eau efficace selon un rapport pondéral eau efficace/liant hydraulique compris entre 0,40 et 0,65 (l'eau efficace étant définie selon la norme EN 206-1).

La masse volumique réelle des particules légères à l'état sec (norme NF EN 13055-1 de décembre 2002 (Granulats Légers) qui renvoie pour la méthode de calcul à la norme EN 1097-6 de juin 2001 (Essais pour déterminer les caractéristiques mécaniques et physiques des granulats)) doit être inférieure à 1600 kg/m³ afin d'obtenir un béton léger structurel et isolant. Il existe des particules légères ayant une masse volumique comprise entre 1600 et 2000 kg/m³, mais elles ne permettent pas d'alléger suffisamment le béton obtenu pour développer les propriétés isolantes qui sont recherchées. Les particules dont la masse volumique est inférieure à 800 kg/m³ sont trop peu résistantes (elles s'écrasent facilement) pour obtenir un béton structurel de résistance à la compression minimale de 25 MPa. Les particules dont la masse volumique est supérieure à 2000 kg/m³ sont des particules utilisées dans des bétons classiques, trop lourdes pour être utilisées majoritairement dans un béton léger.

La proportion volumique des particules légères, fines et/ou grossières, correspond à au moins 70 %, de préférence au moins 80 %, de préférence encore au moins 90 % du volume total des granulats. La totalité des granulats peut aussi être constituée de particules légères, fines et/ou grossières.

Par "eau efficace" on désigne l'eau interne du béton située entre les grains du squelette solide formé par les granulats, le ciment et les additions. L'eau efficace représente donc l'eau nécessaire pour l'hydratation et l'obtention de la consistance. C'est l'eau totale à laquelle on soustrait l'eau absorbée par les granulats.

La résistance du béton ou mortier léger est contrôlée par la résistance des granulats parmi lesquels la fraction de granulats légers et par la résistance de la matrice cimentaire. La résistance du béton ou du mortier léger est également intimement liée à la différence de rigidité entre ces deux phases et à leurs proportions volumiques respectives.

La résistance et la rigidité des granulats légers sont contrôlées par la nature même des granulats et par le procédé d'expansion lorsqu'il s'agit de granulats artificiels ; il s'agit donc de paramètres qu'on ne peut normalement pas modifier à moins d'utiliser des procédés particuliers qui peuvent s'avérer coûteux.

La matrice cimentaire, principalement composée de liant hydraulique et d'eau, correspond à l'état durci à un assemblage d'hydrates. L'enchevêtrement de ces hydrates assure la cohésion du béton et confère à cette matrice des propriétés dont les performances en termes de résistance et de rigidité varient en fonction du type de liant utilisé et de la proportion d'eau efficace.

Par rapport au poids de liant, plus on augmente la proportion d'eau efficace dans la matrice cimentaire et plus on augmente sa porosité, ce qui se traduit généralement par une diminution de sa masse volumique, de sa résistance et de sa rigidité.

Lors de la recherche d'une solution au problème d'optimisation du béton léger, il s'est avéré particulièrement avantageux, contrairement à la pratique habituelle, de combiner des granulats légers avec une matrice cimentaire renfermant une importante teneur en eau efficace (volume d'eau efficace compris avantageusement entre 200 et 300 L/m³ de béton frais, de préférence 205 à 275 L/m³ de béton frais, de préférence encore de 210 à 250 L/m³ de béton frais). En effet, il a été constaté qu'une importante teneur en eau efficace, qui permet de diminuer la masse volumique de la matrice cimentaire et conséquemment sa rigidité, contribue également à réduire la différence de rigidité entre la matrice et les granulats légers. On obtient ainsi un béton plus homogène élastiquement, pouvant présenter une résistance à la compression supérieure à 25 MPa à 28 jours.

Par ailleurs, la conductivité thermique du béton varie de manière proportionnelle à sa masse volumique. Ainsi, plus on ajoute de l'eau au béton et plus on diminue sa masse volumique à l'état frais et également à l'état durci après séchage car l'eau, de masse volumique inférieure à celle de tous les autres constituants du béton, si elle est introduite en excès ne sera pas totalement liée aux hydrates de la matrice cimentaire et pourra s'évaporer. En effet, au cours du séchage du béton, l'évaporation de l'excédent d'eau efficace par rapport à la quantité nécessaire à l'hydratation du ciment et des possibles additions entraine la formation de porosités contenant de l'air. Ces porosités de la matrice cimentaire, ainsi que la porosité apportée par les granulats légers, sont à l'origine de la faible masse volumique du béton sec et de ses propriétés thermiques isolantes.

Dans le cas de la présente invention, le béton léger une fois durci et sec renferme des porosités. Ces porosités ont été créées par de l'eau et non pas par des bulles d'air comme dans les compositions de mortier ou béton légers de l'art antérieur. Toutefois, un tel béton est particulièrement sensible à la ségrégation et au ressuage de sorte qu'en présence d'un superplastifiant, un adjuvant augmentant la viscosité de la matrice cimentaire doit être incorporé à la composition.

Cependant, on constate qu'en présence d'une quantité d'eau supérieure à 200 L/m³, pour obtenir un béton fluide auto-plaçant, ledit béton selon l'invention ne présente, de manière surprenante, aucune ségrégation ni ressuage.

De manière avantageuse, le liant hydraulique peut être un ciment comprenant un mélange d'un clinker de type sulfo-alumineux et d'un ciment CEM I.

La proportion de liant hydraulique est de préférence d'au moins 300 kg/m³ de béton frais, de préférence d'au moins 330 kg/m³ de béton frais.

Par addition, on désigne un matériau tel que décrit dans la norme NF EN 206-1 d'avril 2004, paragraphe 3.1.23, c'est-à-dire un matériau finement divisé utilisé pour améliorer certaines propriétés ou conférer des propriétés particulières. Les additions regroupent des matériaux quasiment inertes (sans effet pouzzolanique), et des matériaux à caractère pouzzolanique (ou hydraulique latent). Les fillers calcaires et les fillers siliceux sont des exemples d'additions quasiment inertes. Les fumées de silice, les cendres volantes, les laitiers de haut fourneau et les métakaolins sont des exemples d'additions à caractère pouzzolanique.

Dans la composition selon la présente invention, dans la fraction des granulats fins et/ou grossiers composés de particules légères, lesdites particules légères, fines ou grossières, sont des particules minérales d'origine naturelle ou artificielle, choisies parmi les pierres ponces, les argiles expansées, les schistes expansés, des laitiers expansés, ou expansés bouletés, les verres expansés, les granulats expansés à base de marbre, granite, ardoise (notamment des sous-produits de pierre ornementale), de carbone expansé, ou de céramique ou un mélange de plusieurs de celles-ci.

Les particules légères peuvent également comprendre des particules organiques d'origine synthétique telles que des particules de polystyrène.

Les particules légères fines sont, de préférence, des argiles ou des schistes expansés de masse volumique réelle à l'état sec comprise entre 1000 kg/m³ et 1400 kg/m³.

Les particules légères grossières sont, de préférence, des gravillons d'argile ou de schiste expansé de masse volumique réelle à l'état sec comprise entre 1000 et 1400 kg/m³, d'une taille maximale de 14 mm et d'une résistance à l'écrasement au moins supérieure à 4 N/mm², de préférence supérieure à 6 N/mm², de préférence encore supérieure à 8 N/mm².

Ces performances de résistance à l'écrasement participent à l'obtention de performances à la résistance à la compression d'au moins 25 MPa près 28 jours, de préférence d'au moins 28 MPa après 28 jours et de préférence encore 30 MPa après 28 jours du béton durci à l'état sec.

Selon une variante, il est possible de conditionner préalablement les particules légères fines ou grossières en vue de modifier leur capacité d'absorption d'eau ou leur hydrophobicité. Ce traitement peut être réalisé en saturant ou en enrobant lesdites particules légères à l'aide d'un composé hydrophobe, tel qu'une résine pure ou sous la forme d'une émulsion, ou tel qu'un gel organique ou inorganique. Ces traitements sont connus de l'homme de l'art (WO 2009/083809).

De manière avantageuse, le volume total des granulats représente au moins 530 L/m³ de béton frais, de préférence au moins 560 L/m³ de béton frais.

L'agent viscosant peut être choisi parmi les éthers de cellulose notamment les polysaccharides, les hydroxyalkylcelluloses, les hydroxyéthylcelluloses, la méthylcellulose, la carboxyméthylcellulose, l'hydroxyéthylcellulose, l'éthylhydroxyéthylcellulose, les poly(oxydes d'éthylène), les alcools polyvinyliques, les polyamides.

De préférence, ledit agent viscosant est une hydroxyalkylcellulose, de préférence une hydroxyéthylcellulose, non modifiée hydrophobe.

De préférence, ledit agent viscosant est une formulation telle que décrite dans la demande WO 2011/114036, notamment une formulation comprenant de l'hydroxyéthylcellulose, de l'attapulgite et un filler siliceux dans une solution aqueuse de K₂CO₃, et de préférence le produit Collaxim SF commercialisé par la Société AXIM.

La proportion dudit agent viscosant représente avantageusement entre 0,05 et 2 % de la masse du ciment, particulièrement entre 0,3 et 1 % de la masse du ciment, préférentiellement entre 0,3 et 0,5 % de la masse du ciment.

La composition de béton ou mortier léger structurel selon la présente invention comprend un superplastifiant qui peut être choisi parmi les polynaphtalènes sulfonates, les polymélamines sulfonates, les lignosulfonates et les polycarboxylates, préférentiellement un dérivé de polycarboxylate avec des chaînes latérales polyoxyde d'éthylène.

La teneur en superplastifiant est avantageusement inférieure à 2,5 % en poids du ciment, de préférence comprise entre 0,3 % et 2,5 % en poids du ciment, de préférence encore comprise entre 0,3 et 1 % en poids du ciment.

D'autres adjuvants peuvent être introduits dans la composition de la présente invention, par exemple un agent anti-retrait, tel qu'une formulation de copolymères d'oxyde de propylène et d'oxyde d'éthylène, par exemple le produit Cim'antiretrait commercialisé par la Société AXIM, dans des proportions comprises entre 0,1 et 3 % en poids par rapport au ciment, de préférence entre 0,5 et 2 %, et de préférence encore entre 1 et 1,5 % en poids par rapport au ciment.

De manière surprenante, les compositions, selon la présente invention, qui ne renferment pas d'agents entraîneurs d'air, permettent d'obtenir néanmoins des bétons ou mortiers légers.

Le procédé de préparation d'une composition de béton ou de mortier léger structurel isolant, telle que décrite ci-dessus, comprend, avant le mélange des constituants de la composition telle que décrite ci-dessus, au moins une étape de pré-mouillage et saturation en eau de la fraction de granulats composés de particules légères.

Ce pré-mouillage peut avoir lieu par brassage dans l'eau ou par aspersion d'eau. En effet, ces particules légères étant poreuses, elles absorbent une fraction importante d'eau qui peut ensuite s'évaporer pour laisser la place à des vides lors du séchage du béton. Ces vides confèrent des propriétés isolantes au béton ou au mortier ainsi préparé.

La présente invention concerne également le béton ou mortier léger structurel dont la composition est décrite ci-dessus et préparée selon le procédé décrit précédemment, caractérisé en ce qu'il présente une masse volumique inférieure à 1500 kg/m³, de préférence inférieure à 1400 kg/m³, à l'état sec et une conductivité thermique inférieure ou égale à 0,6 W/m.K, de préférence comprise entre 0,4 et 0,6 W/m.K.

Le béton ou mortier léger structurel isolant préparé à partir d'une composition telle que décrite ci-dessus ou selon le procédé précédent est caractérisé en ce qu'il présente une masse volumique inférieure à 1500 kg/m³, de préférence inférieure à 1400 kg/m³, à l'état sec et une résistance à la compression d'au moins 25 MPa après 28 jours, de préférence d'au moins 28 MPa après 28 jours, de préférence encore, d'au moins 30 MPa après 28 jours.

La masse volumique à l'état sec est déterminée sur des échantillons âgés de 28 jours, ayant une masse constante après passage dans une étuve ventilée (température environ 105°C). Par masse constante, on désigne une variation de masse inférieure à 0,2 % en 24 heures. Ce protocole de mesure est conforme au paragraphe 5.4 de la norme NF EN 12390-7 d'avril 2012, et permet de caractériser les bétons légers tels que définis dans la norme NF EN 206-1 d'avril 2004 paragraphes 3.1.8 et 5.5.2.

Ce béton ou mortier selon la présente invention trouve l'utilisation intéressante en tant que béton ou mortier auto-plaçant.

La présente invention sera décrite plus en détail à l'aide des exemples ci-après mentionnés à titre d'illustration.

### EXEMPLES

Dans un premier temps, la masse volumique réelle à l'état sec et l'absorption d'eau des granulats légers est déterminée suivant des protocoles normés (NF EN 13055-1 (Décembre 2002), et EN 1097-6 (Juin 2001)).

Néanmoins, afin d'affiner ces valeurs, dans les exemples de la présente demande les valeurs de masse volumique réelle à l'état sec, et d'absorption d'eau, des granulats légers ont été re-calculées sur la base de plusieurs gâchées car des écarts ont été constatés avec les valeurs théoriques annoncées, ce qui conduisait à des écarts également entre la masse volumique théorique et la masse volumique expérimentale du béton frais. Pour cela, il a été pris en compte la masse totale des éléments incorporés dans le béton, la teneur en air mesurée sur béton frais et la masse volumique à l'état frais du béton ainsi obtenu. Ce paramètre est important dans le cadre de la présente invention car l'absorption des granulats impacte directement la quantité d'eau efficace présente dans la composition en plus de la masse volumique réelle des granulats qui impacte directement le volume des granulats.

### Exemple 1

Toutes les valeurs indiquées (masse et volume) se rapportent à un volume de 1 m³ de béton frais.

### Formulation

- 345 kg/m³ de CEM I 52.5 N CE CP2 NF (Gaurain),
- 148 kg/m³ de Cendres Volantes Carling (Surchiste),
soit 493 kg/m³ de liant hydraulique
- 414 kg/m³ de sable de schiste-ardoisier expansé GEM "104" (masse volumique réelle déterminée à l'état sec : 1,55 kg/L ; absorption d'eau à 24h : 13 % ; granulométrie inférieure ou égale à 4 mm)
- 416 kg/m³ de gravillon de schiste-ardoisier expansé GEM "1048" (masse volumique réelle déterminée à l'état sec : 1,46 kg/L ; absorption d'eau à 24h : 5,5 % ; granulométrie supérieure à 4 et inférieure ou égale à 10 mm)
(La totalité des granulats fins et grossiers est constituée ici de granulats légers)
- 1,73 kg/m³ de superplastifiant AXIM CIMFLUID ADAGIO 4019 (à base de polycarboxylate) (extrait sec 30 % en poids), soit 0,5 % en poids par rapport à la masse de ciment,
- 1,73 kg/m³ d'agent viscosant AXIM COLLAXIM SF (à base de hydroxyéthylcellulose) (extrait sec 40 %), soit 0,5 % en poids par rapport à la masse de ciment,
- 293 kg/m³ d'eau, soit 216 kg/m³ d'eau efficace, c'est-à-dire un rapport pondéral Eau efficace/Liant de 0,44 (mesuré selon la norme EN 206-1).

### Matériel et méthode

Le béton a été confectionné en laboratoire.

Les granulats légers ont été préalablement saturés en eau pendant une durée supérieure à 24 heures avant la gâchée du béton. La teneur en eau des granulats a été mesurée avant la réalisation de la gâchée de manière à calculer l'eau d'ajout du béton (l'eau apportée par l'ensemble des granulats, de même que celle apportée par les adjuvants en phase aqueuse, est soustraite de l'eau totale).

Le béton a été gâché avec l'eau d'ajout dans un malaxeur à mouvement planétaire SKAKO Couvrot d'une capacité volumique maximale de 90 litres. Le protocole de malaxage a suivi les étapes suivantes :
- Introduction des granulats, du ciment et des cendres volantes ;
- L'eau et les adjuvants sont pré-pesés et réservés ;
- Malaxage de 30 secondes ;
- Introduction des 2/3 de l'eau d'ajout en 30 secondes sans arrêt du malaxeur ;
- Introduction du 1/3 restant de l'eau d'ajout incorporant l'agent viscosant (dans le cas du AXIM Collaxim SF, le temps de rétention dans l'eau avant incorporation dans le béton ne doit pas dépasser 2 minutes) ;
- Introduction du superplastifiant sans arrêt du malaxeur;
- Malaxage de 2 minutes ;
- Vidange du malaxeur.

Toutes les éprouvettes nécessaires à la caractérisation des propriétés du béton à l'état durci ont été confectionnées puis soumises à une cure conformément à la norme NF EN 12390-2 (avril 2012).

### Caractéristiques du béton à l'état frais ou durci

Masse volumique à l'état frais selon NF EN 12350-6 (avril 2012) :1617 kg/m³ de béton frais,
Teneur en air du béton frais selon NF EN 12350-7 (avril 2012) : 5,5 % en volume,
Affaissement au cône d'Abrams selon NF EN 12350-2 (avril 2012) : 240 mm en fin de malaxage,
   220 mm à 60 minutes,
Résistance à la compression selon NF EN 12390-3 (avril 2012) (éprouvettes cylindriques de 11 cm de diamètre sur 22 cm de haut) : 5,8 MPa à 1 jour,
24,2 MPa à 7 jours,
33,7 MPa à 28 jours,
Résistance à la flexion 3 points à 28 jours selon NF EN 12390-5 (**avril 2012**) (éprouvette prismatique de 10 cm x 10 cm x 40 cm) : 4 MPa à 28 jours,
Module d'Young à 28 jours (éprouvettes cylindriques de 16 cm de diamètre sur 32 cm de haut) : 18200 MPa,
Retrait total à 28 jours (conservation à 20°C et 50 % d'humidité relative) : 600 µm/m, Autres propriétés du béton durci après séchage en étuve à 105°C jusqu'à masse constante :
   Masse volumique après séchage à l'étuve à 105°C : 1385 kg/m³,
   Conductivité thermique après séchage à l'étuve à 105°C : 0,58 W .m⁻¹ .K⁻¹.

### Exemple 2

Toutes les valeurs indiquées (masse et volume) se rapportent à un volume de 1 m³ de béton frais.

### Formulation

- 330 kg/m³ de CEM I 52.5 N CE CP2 NF (Gaurain),
- 145 kg/m³ de Cendres Volantes Carling (Surchiste),
soit un total de 475 kg/m³ de liant hydraulique
- 384 kg/m³ de sable d'argile expansé AR 0/4 650 ARGEX (Masse volumique réelle déterminée à l'état sec : 1,40 kg/L ; absorption d'eau à 24h : 19,9 %),
- 332 kg/m³ de gravillon d'argile expansé AM 4/8 650 ARGEX (Masse volumique réelle déterminée à l'état sec : 1,20 kg/L ; absorption d'eau à 24h : 19,0 %),
(La totalité des granulats fins et grossiers est constituée ici de granulats légers)
- 1,06 kg/m³ de superplastifiant AXIM CIMFLUID ADAGIO 4019 (à base de polycarboxylate) (extrait sec 30 %), soit 0,32 % par rapport à la masse de ciment,
- 1,65 kg/m³ d'agent viscosant AXIM COLLAXIM SF (à base de hydroxyéthylcellulose) (extrait sec 40 %), soit 0,5 % en poids par rapport à la masse de ciment,
- 378 kg/m³ d'eau, soit 238 kg/m³ d'eau efficace, c'est-à-dire un rapport pondéral Eau efficace/Liant de 0,50.

### Matériel et méthode

Le béton a été confectionné en milieu industriel, dans une centrale de béton prêt à l'emploi équipée d'un malaxeur à mouvement planétaire. Des cases à granulats ont été dédiées à chacun des granulats Argex pour effectuer un pré-mouillage à l'eau d'environ 3 heures par jour pendant 3 jours, ce qui a été suffisant pour saturer les granulats. Les granulats ont ensuite été réhomogénéisés puis chargés dans les trémies de stockage du malaxeur de la centrale. La teneur en eau des granulats a été mesurée avant la fabrication du béton de manière à calculer l'eau d'ajout (l'eau apportée par l'ensemble des granulats, de même que celle apportée par les adjuvants en phase aqueuse, doit être soustraite de l'eau totale).

Toutes les matières premières, à l'exclusion de l'eau et des adjuvants, ont été introduites dans le malaxeur puis homogénéisés pendant 30 secondes. L'eau et les adjuvants (superplastifiant et agent viscosant) ont ensuite été ajoutés simultanément au mélange grâce au système automatisé de la centrale. Le malaxage s'est poursuivi quelques dizaines de secondes après stabilisation du wattmètre (mesurant la puissance de malaxage).

### Caractéristiques du béton à l'état frais ou durci

Température du béton frais : 11,2°C,
Masse volumique à l'état frais selon NF EN 12350-6 (avril 2012) : 1667 kg /m³ de béton frais,
Teneur en air du béton frais selon NF EN 12350-7 (avril 2012): 7 % en volume,
Affaissement au cône d'Abrams selon NF EN 12350-2 (avril 2012):
   240 mm en fin de malaxage,
   240 mm après 30 minutes,
   230 mm après 60 minutes,
Résistance à la compression à 28 jours selon NF EN 12390-3 (avril 2012) (éprouvettes cylindriques de 16 cm de diamètre sur 32 cm de haut) : 32,8 MPa,
Masse volumique sèche après séchage à l'étuve à 105°C : 1370 kg/m³ de béton sec, Conductivité thermique après séchage à l'étuve à 105°C : 0,46 W.m⁻¹.K⁻¹.

Les compositions ci-dessus conformes à la présente invention, permettent donc d'obtenir un béton structurel, à résistance à la compression à 28 jours élevée (supérieure à 32 MPa), malgré une faible masse volumique à l'état sec, inférieure à 1500 kg/m³, voire inférieure à 1400 kg/m³.

Ceci confère au béton fini également des propriétés isolantes particulièrement recherchées actuellement dans le domaine de la construction, avec une conductivité thermique inférieure à 0,6 W.m⁻¹.K⁻¹, voire inférieure à 0,5 W.m⁻¹.K⁻¹ dans l'exemple 2.

### Exemple 3

Toutes les valeurs indiquées (masse et volume) se rapportent à un volume de 1 m³ de béton frais.

### Formulation

- 345 kg/m³ de CEM I 52.5 N CE CP2 NF (Gaurain),
- 148 kg/m³ de Cendres Volantes Carling (Surchiste),
soit 493 kg/m³ de liant hydraulique
- 423 kg/m³ de sable de schiste-ardoisier expansé GEM "104" (masse volumique réelle : 1,55 kg/L ; absorption d'eau à 24h : 13 %; granulométrie inférieure ou égale à 4 mm)
- 424 kg/m³ de gravillon de schiste-ardoisier expansé GEM "1048" (masse volumique réelle : 1,46 kg/L ; absorption d'eau à 24h : 5,5 %; granulométrie supérieure à 4 mm et inférieure ou égale à 10 mm)
(La totalité des granulats fins et grossiers est constituée ici de granulats légers)
- 2,40 kg/m³ de superplastifiant AXIM CIMFLUID ADAGIO 4019 (à base de polycarboxylate) (extrait sec 30 % en poids), soit 0,7 % en poids par rapport à la masse de ciment,
- 1,70 kg/m³ d'agent viscosant AXIM COLLAXIM SF (à base de hydroxyéthylcellulose) (extrait sec 40 %), soit 0,5 % en poids par rapport à la masse de ciment,
- 276 kg/m³ d'eau, soit 200 kg/m³ d'eau efficace, c'est-à-dire un rapport pondéral Eau efficace/Liant de 0,40 (déterminé selon la norme NF EN 206-1 (avril 2004)).

### Matériel et méthode

Le matériel mis en œuvre est identique à celui de l'exemple 1. Le protocole de malaxage suivi est le suivant :
- Introduction des granulats, du ciment et des cendres volantes ;
- L'eau et les adjuvants sont pré-pesés et réservés ;
- Malaxage de 30 secondes ;
- Introduction de l'eau d'ajout en 30 secondes sans arrêt du malaxeur ;
- Introduction du superplastifiant ; sans arrêt du malaxeur;
- Introduction de l'agent viscosant ; sans arrêt du malaxeur ;
- Malaxage de 2 minutes ;
- Vidange du malaxeur.

Dans cet exemple, l'agent viscosant n'est pas solubilisé dans une fraction de l'eau de gâchage puis introduit dans le malaxeur, mais est directement introduit dans le malaxeur juste après la totalité de l'eau de gâchée, et l'introduction du superplastifiant.

### Caractéristiques du béton à l'état frais ou durci

Température du béton frais : 24,6°C,
Masse volumique à l'état frais selon NF EN 12350-6 (avril 2012) :1700 kg/m³ de béton frais,
Teneur en air du béton frais selon NF EN 12350-7 (avril 2012): 0,4 % en volume,
Affaissement au cône d'Abrams selon NF EN 12350-2 (avril 2012): 220 mm en fin de malaxage,
Résistance à la compression selon NF EN 12390-3 (avril 2012) (éprouvettes cylindriques de 16 cm de diamètre sur 32 cm de haut) : 40,4 MPa à 7 jours, 51,6 MPa à 28 jours,
Retrait total à 28 jours (conservation à 20°C et 50 % d'humidité relative) : 577 µm/m,

### Exemple 4

Toutes les valeurs indiquées (masse et volume) se rapportent à un volume de 1 m³ de béton frais.

### Formulation

- 345 kg/m³ de CEM I 52.5 N CE CP2 NF (Gaurain),
- 148 kg/m³ de Cendres Volantes Carling (Surchiste),
soit 493 kg/m³ de liant hydraulique
- 414 kg/m³ de sable de schiste-ardoisier expansé GEM "104" (masse volumique réelle : 1,55 kg/L ; absorption d'eau à 24h : 13 % ; granulométrie inférieure ou égale à 4 mm)
- 415 kg/m³ de gravillon de schiste-ardoisier expansé GEM "1048" (masse volumique réelle : 1,46 kg/L ; absorption d'eau à 24h : 5,5 % ; granulométrie supérieure à 4 et inférieure ou égale à 10 mm)
(La totalité des granulats fins et grossiers est constituée ici de granulats légers)
- 4,14 kg/m³ de superplastifiant AXIM CIMFLUID ADAGIO 4019 (à base de polycarboxylate) (extrait sec 30 % en poids), soit 1,2 % en poids par rapport à la masse de ciment,
- 1,72 kg/m³ d'agent viscosant Chrysoplast V90 (à base de hydroxyéthylcellulose) (extrait sec 40 %), soit 0,5 % en poids par rapport à la masse de ciment,
- 293 kg/m³ d'eau, soit 218 kg/m³ d'eau efficace, c'est-à-dire un rapport pondéral Eau efficace/Liant de 0,44 (déterminé selon la norme NF EN 206-1 (avril 2004).

### Matériel et méthode

Identiques à ceux de l'exemple 3.

### Caractéristiques du béton à l'état frais ou durci

Température du béton frais : 21,2°C,
Masse volumique à l'état frais selon NF EN 12350-6 (avril 2012): 1652 kg/m³ de béton frais,
Teneur en air du béton frais selon NF EN 12350-7 (avril 2012): 3,6 % en volume,
Affaissement au cône d'Abrams selon NF EN 12350-2 (avril 2012): 210 mm en fin de malaxage,
Résistance à la compression selon NF EN 12390-3 (avril 2012) (éprouvettes cylindriques de 16 cm de diamètre sur 32 cm de haut) : 38,8 MPa à 7 jours, 42,6 MPa à 28 jours,
Retrait total à 28 jours (conservation à 20°C et 50 % d'humidité relative) : 540 µm/m,

### Exemple 5

Toutes les valeurs indiquées (masse et volume) se rapportent à un volume de 1 m³ de béton frais.

### Formulation

- 330 kg/m³ de CEM I 52.5 N CE CP2 NF (Gaurain),
- 145 kg/m³ de Cendres Volantes Carling (Surchiste),
soit 475 kg/m³ de liant hydraulique
- 397 kg/m³ de sable d'argile expansé AR 0/4 650 ARGEX (Masse volumique réelle à sec : 1,40 kg/L ; absorption d'eau à 24h : 19,9 %),
- 343 kg/m³ de gravillon d'argile expansé AM 4/8 650 ARGEX (Masse volumique réelle à sec : 1,20 kg/L ; absorption d'eau à 24h : 19,0 %),
(La totalité des granulats fins et grossiers est constituée ici de granulats légers)
- 2,31 kg/m³ de superplastifiant AXIM CIMFLUID ADAGIO 4019 (à base de polycarboxylate) (extrait sec 30 % en poids), soit 0,7 % en poids par rapport à la masse de ciment,
- 1,65 kg/m³ d'agent viscosant AXIM COLLAXIM SF (à base de hydroxyéthylcellulose) (extrait sec 40 %), soit 0,5 % en poids par rapport à la masse de ciment,
- 343 kg/m³ d'eau, soit 200 kg/m³ d'eau efficace, c'est-à-dire un rapport pondéral Eau efficace/Liant de 0,42 (déterminé selon la norme NF EN 206-1 (avril 2004)).

### Matériel et méthode

Identiques à ceux de l'exemple 3.

### Caractéristiques du béton à l'état frais ou durci

Masse volumique à l'état frais selon NF EN 12350-6 (avril 2012): 1652 kg/m³ de béton frais,
Teneur en air du béton frais selon NF EN 12350-7 (avril 2012): 6 % en volume,
Affaissement au cône d'Abrams selon NF EN 12350-2 (avril 2012) : 210 mm en fin de malaxage,
Résistance à la compression selon NF EN 12390-3 (avril 2012) (éprouvettes cylindriques de 16 cm de diamètre sur 32 cm de haut) : 24,8 MPa à 7 jours, 30,3 MPa à 28 jours,
Retrait total à 28 jours (conservation à 20°C et 50 % d'humidité relative) : 696 µm/m,

### Exemple 6

Toutes les valeurs indiquées (masse et volume) se rapportent à un volume de 1 m³ de béton frais.

### Formulation

Identique à celle de l'exemple 2

### Matériel et méthode

Identiques à ceux de l'exemple 2.

Les bétons obtenus ont été mis en œuvre dans la réalisation d'un bâtiment à Trappes (78190 France). Les caractéristiques présentées ci-dessous sont une moyenne des mesures effectuées sur des échantillons de contrôle.

### Caractéristiques du béton à l'état frais ou durci

Masse volumique à l'état frais selon NF EN 12350-6 (avril 2012): 1618 kg /m³ de béton frais,
Affaissement au cône d'Abrams selon NF EN 12350-2 (avril 2012): 207 mm en fin de malaxage,
Résistance à la compression selon NF EN 12390-3 (avril 2012) (éprouvettes cylindriques de 16 cm de diamètre sur 32 cm de haut) : 22,8 MPa à 7 jours, 26,9 MPa à 28 jours.

### Exemple 7

Toutes les valeurs indiquées (masse et volume) se rapportent à un volume de 1 m³ de béton frais.

### Formulation

Identique à celle de l'exemple 2

### Matériel et méthode

Identiques à ceux de l'exemple 2.

Les bétons obtenus ont été mis en œuvre dans la réalisation d'un bâtiment à Athis-Mons (91200 France). Les caractéristiques présentées ci-dessous sont une moyenne de mesures effectuées sur des échantillons de contrôle.

### Caractéristiques du béton à l'état frais ou durci

Masse volumique à l'état frais selon NF EN 12350-6 (avril 2012): 1620 kg /m³ de béton frais,
Teneur en air du béton frais selon NF EN 12350-7 (avril 2012): 2,9 % en volume, Affaissement au cône d'Abrams selon NF EN 12350-2 (avril 2012): 220 mm en fin de malaxage,
Résistance à la compression selon NF EN 12390-3 (avril 2012) (éprouvettes cylindriques de 16 cm de diamètre sur 32 cm de haut) : 20,4 MPa à 7 jours, 26,9 MPa à 28 jours,
Masse volumique sèche après séchage à l'étuve à 105°C : 1347 kg/m³ de béton sec, Conductivité thermique après séchage à l'étuve à 105°C : 0,46 W.m⁻¹.K⁻¹.

## Revendications

1. Composition de béton ou mortier, léger, structurel, comprenant, à l'état frais, un liant hydraulique, des granulats et de l'eau,
**caractérisée en ce qu'**elle comprend :
- une teneur en liant hydraulique, incluant du ciment et d'éventuelles additions, supérieure ou égale à 280 kg/m³ de béton frais, le liant hydraulique comprend un ciment choisi parmi les ciments CEM I, CEM II, CEM III, CEM IV et CEM V, ou un clinker sulfo-alumineux ou un mélange de ceux-ci, les additions éventuelles étant sous la forme de particules fines de taille inférieure à 125 micromètres, choisies parmi les fillers calcaires, les fillers siliceux, les fumées de silice, les cendres volantes, les laitiers de haut fourneau et les métakaolins,
- des granulats grossiers de taille supérieure à 4 mm et/ou des granulats fins de granulométrie inférieure ou égale à 4 mm, une proportion volumique d'au moins 70 % desdits granulats, fins et/ou grossiers, étant composée de particules légères, fines et/ou grossières, dont la masse volumique réelle à l'état sec est comprise entre 800 et 1600 kg/m³, la quantité totale de granulats étant supérieure ou égale à 500 L/m³ de béton frais,
- un superplastifiant,
- au moins un agent viscosant et
- de l'eau efficace selon un rapport pondéral eau efficace/liant hydraulique compris entre 0,40 et 0,65.

2. Composition selon la revendication 1,
**caractérisée en ce que** la proportion de liant hydraulique est d'au moins 300 kg/m³ de béton frais, de préférence d'au moins 330 kg/m³ de béton frais.

3. Composition selon l'une quelconque des revendications précédentes,
**caractérisée en ce que** le liant hydraulique est un ciment comprenant un mélange d'un clinker de type sulfo-alumineux et d'un ciment CEM I.

4. Composition selon l'une quelconque des revendications précédentes,
**caractérisée en ce que** les particules légères, fines ou grossières, sont des particules minérales d'origine naturelle ou artificielle, choisies parmi les pierres ponces, les argiles expansées, les schistes expansés, des laitiers expansés, ou expansés bouletés, les verres expansés, les granulats expansés à base de marbre, granite, ardoise ou de céramique, ou un mélange de plusieurs de celles- ci.

5. Composition selon l'une quelconque des revendications précédentes,
**caractérisée en ce que** les particules légères fines sont des argiles ou des schistes expansés de masse volumique réelle à l'état sec comprise entre 1000 kg/m³ et 1400 kg/m³.

6. Composition selon l'une quelconque des revendications précédentes **caractérisée en ce que** les particules légères grossières sont des gravillons d'argile ou de schiste expansé de masse volumique réelle à l'état sec comprise entre 1000 et 1400 kg/m³, d'une taille maximale de 14 mm et d'une résistance à l'écrasement au moins supérieure à 4 N/mm², de préférence supérieure à 6 N/mm², de préférence encore supérieure à 8 N/mm².

7. Composition selon l'une quelconque des revendications précédentes,
**caractérisée en ce que** le volume total des granulats représente au moins 530 L/m³ de béton frais, de préférence au moins 560 L/m³ de béton frais.

8. Composition selon l'une quelconque des revendications précédentes,
**caractérisée en ce que** l'agent viscosant est choisi parmi les éthers de cellulose notamment les polysaccharides, les hydroxyalkylcelluloses, les hydroxyéthylcelluloses, la méthylcellulose, la carboxyméthylcellulose, l'hydroxyéthylcellulose, l'éthylhydroxyéthylcellulose, les poly(oxydes d'éthylène), les alcools polyvinyliques, les polyamides.

9. Composition selon la revendication 8,
**caractérisée en ce que** ledit agent viscosant est une hydroxyalkylcellulose, de préférence une hydroxyéthylcellulose, non modifiée hydrophobe.

10. Composition selon la revendication 8,
**caractérisée en ce que** ledit agent viscosant est une formulation comprenant de l'hydroxyéthylcellulose, de l'attapulgite et un filler siliceux dans une solution aqueuse de K₂CO₃.

11. Composition selon l'une quelconque des revendications précédentes,
**caractérisée en ce que** la proportion dudit agent viscosant représente entre 0,05 et 2 % de la masse du ciment, particulièrement entre 0,3 et 1 % de la masse du ciment, préférentiellement entre 0,3 et 0,5 % de la masse du ciment.

12. Composition selon l'une quelconque des revendications précédentes,
**caractérisée en ce qu'**elle comprend un superplastifiant choisi parmi les polynaphtalènes sulfonates, les polymélamines sulfonates, les lignosulfonates et les polycarboxylates, préférentiellement un dérivé de polycarboxylate avec des chaînes latérales polyoxyde d'éthylène.

13. Composition selon la revendication 12, **caractérisée en ce que** la teneur en superplastifiant est inférieure à 2,5 % en poids du ciment, de préférence comprise entre 0,3 % et 2,5 % en poids du ciment, de préférence encore comprise entre 0,3 et 1 % en poids du ciment.

14. Composition selon l'une quelconque des revendications précédentes,
**caractérisée en ce que** l'eau efficace représente 200 à 300 L/m³ de béton frais, de préférence 205 à 275 L/m³ de béton frais, de préférence encore de 210 à 250 L/m³ de bétonrais.

15. Utilisation de la composition selon l'une quelconque des revendications 1 à 14 pour la réalisation d'un béton léger auto-plaçant.

## Patentansprüche

1. Konstruktionsleichtbeton- oder -mörtelzusammensetzung, die im frischen Zustand ein hydraulisches Bindemittel, Granulate und Wasser umfasst, **dadurch gekennzeichnet, dass** sie umfasst:
- einen Gehalt an hydraulischem Bindemittel einschließlich Zement und etwaiger Zusätze, der höher oder gleich 280 kg/m³ Frischbeton ist, wobei das hydraulische Bindemittel einen Zement, der aus den Zementen CEM I, CEM II, CEM III, CEM IV und CEM V ausgewählt ist, oder einen Sulfoaluminat-Klinker oder eine Mischung davon umfasst, wobei die etwaigen Zusätze die Form von feinen Partikeln mit einer Größe von kleiner als 125 Mikrometer aufweisen, die aus Kalkfüllern, Siliziumdioxidfüllern, Silikastäuben, Flugaschen, Hochofenschlacken und Metakaolinen ausgewählt sind,
- grobe Granulate mit einer Größe von größer als 4 mm und/oder feine Granulate mit einer Körnung von kleiner oder gleich 4 mm, einem Volumenanteil von mindestens 70 % der feinen und/oder groben Granulate, die aus leichten, feinen und/oder groben Partikeln bestehen, deren Rohdichte im trockenen Zustand zwischen 800 und 1600 kg/m³ beträgt, wobei die Gesamtmenge an Granulaten größer oder gleich 500 l/m³ Frischbeton ist,
- einen Betonverflüssiger,
- mindestens ein viskosifizierendes Mittel und
- wirksames Wasser gemäß einem Gewichtsverhältnis von wirksamem Wasser/hydraulischem Bindemittel von zwischen 0,40 und 0,65.

2. Zusammensetzung nach Anspruch 1,
**dadurch gekennzeichnet, dass** der Anteil an hydraulischem Bindemittel mindestens 300 kg/m³ Frischbeton, vorzugsweise mindestens 330 kg/m³ Frischbeton, beträgt.

3. Zusammensetzung nach einem der vorhergehenden Ansprüche,
**dadurch gekennzeichnet, dass** das hydraulische Bindemittel ein Zement ist, der eine Mischung aus einem Klinker vom Typ Sulfoaluminat und einem Zement CEM 1 umfasst.

4. Zusammensetzung nach einem der vorhergehenden Ansprüche,
**dadurch gekennzeichnet, dass** die leichten, feinen oder groben Partikel mineralische Partikel natürlichen oder künstlichen Ursprungs sind, die aus Bimssteinen, Blähtonen, Blähschiefern, Schaumschlacken oder pelletierten Schaumschlacken, Blähgläsern, Blähgranulaten auf Marmor-, Granit-, Schiefer- oder Keramikbasis oder einer Mischung aus mehreren davon ausgewählt sind.

5. Zusammensetzung nach einem der vorhergehenden Ansprüche,
**dadurch gekennzeichnet, dass** die feinen leichten Partikel Blähtone oder - schiefer mit einer Rohdichte im trockenen Zustand von zwischen 1000 kg/m³ und 1400 kg/m³ sind.

6. Zusammensetzung nach einem der vorhergehenden Ansprüche,
**dadurch gekennzeichnet, dass** die groben leichten Partikel Blähton- oder - schiefersplitte mit einer Rohdichte im trockenen Zustand von zwischen 1000 und 1400 kg/m³, einer Höchstgröße von 14 mm und einer Druckfestigkeit von mindestens höher als 4 N/mm², vorzugsweise höher als 6 N/mm², weiter zu bevorzugen höher als 8 N/mm² sind.

7. Zusammensetzung nach einem der vorhergehenden Ansprüche,
**dadurch gekennzeichnet, dass** das Gesamtvolumen der Granulate mindestens 530 l/m³ Frischbeton, vorzugsweise mindestens 560 l/m³ Frischbeton darstellt.

8. Zusammensetzung nach einem der vorhergehenden Ansprüche,
**dadurch gekennzeichnet, dass** das viskosifizierende Mittel aus Celluloseethern, insbesondere Polysacchariden, Hydroxyalkylcellulosen, Hydroxyethylcellulosen, Methylcellulose, Carboxymethylcellulose, Hydroxyethylcellulose, Ethylhydroxyethylcellulose, Poly(ethylenoxiden), Polyvinylalkoholen und Polyamiden ausgewählt ist.

9. Zusammensetzung nach Anspruch 8,
**dadurch gekennzeichnet, dass** das viskosifizierende Mittel eine Hydroxyalkylcellulose, vorzugsweise eine hydrophobe nicht modifizierte Hydroxyethylcellulose, ist.

10. Zusammensetzung nach Anspruch 8,
**dadurch gekennzeichnet, dass** das viskosifizierende Mittel eine Formulierung ist, die Hydroxyethylcellulose, Attapulgit und einen Siliziumdioxidfüller in einer wässrigen K₂CO₃-Lösung umfasst.

11. Zusammensetzung nach einem der vorhergehenden Ansprüche,
**dadurch gekennzeichnet, dass** der Anteil des viskosifizierenden Mittels zwischen 0,05 und 2 % der Masse des Zements, insbesondere zwischen 0,3 und 1 % der Masse des Zements, vorzugsweise zwischen 0,3 und 0,5 % der Masse des Zements, darstellt.

12. Zusammensetzung nach einem der vorhergehenden Ansprüche,
**dadurch gekennzeichnet, dass** sie einen Betonverflüssiger umfasst, der aus Polynaphtalensulfonaten, Polymelaminsulfonaten, Lignosulfonaten und Polycarboxylaten, vorzugsweise einem Polycarboxylatderivat mit Polyethylenoxid-Seitenketten, ausgewählt ist.

13. Zusammensetzung nach Anspruch 12, **dadurch gekennzeichnet, dass** der Gehalt an Betonverflüssiger kleiner als 2,5 Gew.-% des Zements ist und vorzugsweise zwischen 0,3 % und 2,5 Gew.-% des Zements beträgt und weiter zu bevorzugen zwischen 0,3 und 1 Gew.-% des Zements beträgt.

14. Zusammensetzung nach einem der vorhergehenden Ansprüche,
**dadurch gekennzeichnet, dass** das wirksame Wasser 200 bis 300 l/m³ Frischbeton, vorzugsweise 205 bis 275 l/m³ Frischbeton, weiter zu bevorzugen 210 bis 250 l/m³ Frischbeton darstellt.

15. Verwendung der Zusammensetzung nach einem der Ansprüche 1 bis 14 für die Herstellung eines selbstverdichtenden Leichtbetons.

## Claims

1. A light, structural concrete or mortar composition comprising, in the fresh state, a hydraulic binder, aggregates and water, **characterised in that** it comprises:
- a hydraulic binder content, including cement and any additions, greater than or equal to 280 kg/m³ of fresh concrete, the hydraulic binder comprising a cement selected from among the cements CEM I, CEM II, CEM III, CEM IV and CEM V, or a sulfo-aluminous clinker or a mixture thereof, any additions being in the form of fine particles with a size less than 125 micrometres, chosen from among calcareous fillers, siliceous fillers, silica fume, fly ash, blast furnace slag and metakaolins,
- coarse aggregates with a size greater than 4 mm and/or aggregates with particle size less than or equal to 4 mm, a volume proportion of at least 70% of said aggregates, fine or coarse, being composed of light, fine and/or coarse particles, of which the true density in the dry state is comprised between 800 and 1600 kg/m³, the total quantity of aggregates being greater than or equal to 500 L/m³ of fresh concrete,
- a superplasticiser,
- at least one viscosifying agent and
- effective water according to an effective water/hydraulic binder weight ratio comprised between 0.40 and 0.65.

2. The composition according to claim 1,
**characterised in that** the proportion of hydraulic binder is made at least 300 kg/m³ of fresh concrete, preferably at least 330 kg/m³ of fresh concrete.

3. The composition according to any one of the preceding claims,
**characterised in that** the hydraulic binder is a cement comprising a mixture of a sulfo-aluminous clinker and a CEM 1 cement.

4. The composition according to any one of the preceding claims,
**characterised in that** the light, fine or coarse particles are minerals of natural or artificial origin, chosen from among pumice stones, expanded clays, expanded shales, expanded slag, or expanded pellets, expanded glass, expanded aggregates based on marble, granite, slate or ceramic, or a mixture of several of them.

5. The composition according to any one of the preceding claims, **characterised in that** the fine light particles are expanded clays or shales with a true density in the dry state comprised between 1000 kg/m³ and 1400 kg/m³.

6. The composition according to any one of the preceding claims, **characterised in that** the coarse light particles are chippings of expanded clay or shale with a true density in the dry state comprised between 1000 and 1400 kg/m³, a maximum size of 14 mm and a crushing strength at least greater than 4 N/mm², preferably greater than 6 N/mm², even more preferably greater than 8 N/mm².

7. The composition according to any one of the preceding claims, **characterised in that** the total volume of aggregates represents at least 530 LVm³ of fresh concrete, preferably at least 560 L/m³ of fresh concrete.

8. The composition according to any one of the preceding claims, **characterised in that** the viscosifying agent is selected from among cellulose ethers, notably polysaccharides, hydroxyalkyl celluloses, hydroxyethyl celluloses, methyl cellulose, carboxymethyl cellulose, hydroxyethyl cellulose, ethylhydroxyethyl cellulose, poly(ethylene oxides), polyvinyl alcohols and polyamides.

9. The composition according to claim 8,
**characterised in that** said viscosifying agent is a hydroxyalkyl cellulose, preferably a non hydrophobically modified hydroxyethyl cellulose.

10. The composition according to claim 8,
**characterised in that** said viscosifying agent is a formulation comprising hydroxyethyl cellulose, attapulgite and a siliceous filler in an aqueous solution of K₂CO₃.

11. The composition according to any one of the preceding claims,
**characterised in that** the proportion of said viscosifying agent represents between 0.05 and 2 % of the mass of cement, particularly between 0.3 and 1 % of the mass of cement, preferably between 0.3 and 0.5 % of the mass of cement.

12. The composition according to any one of the preceding claims,
**characterised in that** it comprises a superplasticiser, selected from among polynaphthalene sulfonates, polymelamine sulfonates, lignosulfonates and polycarboxylates, preferably a derivative of polycarboxylate with polyethylene oxide side chains.

13. The composition according to claim 12, **characterised in that** the superplasticiser content is less than 2.5 % by weight of cement, preferably comprised between 0.3 % and 2.5 % by weight of cement, even more preferably comprised between 0.3 and 1 % by weight of cement.

14. The composition according to any one of the preceding claims,
**characterised in that** the effective water represents 200 to 300 L/m³ of fresh concrete, preferably 205 to 275 L/m³ of fresh concrete, even more preferably from 210 to 250 L/m³ of fresh concrete.

15. A use of the composition according to any one of claims 1 to 14 for making a self-compacting light concrete.
